# EUROPÄISCHE PATENTSCHRIFT

(11) **EP 3 515 832 B1**
(45) Veröffentlichungstag und Bekanntmachung des Hinweises auf die Patenterteilung: **26.05.2021**
(21) Anmeldenummer: 17772304.6
(22) Anmeldetag: 13.09.2017
(51) Int. Cl.: B65D 25/14

(54) **SPUNDFASS MIT INLINER, INLINER, SOWIE VERFAHREN ZUR HESTELLUNG DES SPUNDFASSES**
CLOSED-HEAD DRUM WITH LINER, LINER, AND METHOD FOR PRODUCING THE DRUM
FÛT À BONDE DOTÉ D'UN REVÊTEMENT INTÉRIEUR, REVETEMENT, AINSI QUE PROCÉDÉ DE FABRICATION DU FÛT

(30) Priorität: 23.09.2016 DE 202016005920 U
(43) Veröffentlichungstag der Anmeldung: 31.07.2019
(73) Patentinhaber: Mauser-Werke GmbH, 50321 Brühl (DE)
(72) Erfinder: WEYRAUCH, Detlev, 52372 Kreuzau-Untermaubach (DE)
(86) Internationale Anmeldenummer: PCT/EP2017/001086
(87) Internationale Veröffentlichungsnummer: WO 2018/054527

(56) Entgegenhaltungen:
- FR-A1- 2 834 975
- US-A- 5 217 138

## Beschreibung

Die Erfindung betrifft ein Spundfass mit eingesetztem flexiblen Inliner mit einem Einfüll-/Entnahmestutzen und einem Belüftungsstutzen zur Lagerung und zum Transport von insbesondere gefährlichen flüssigen oder fließfähigen Füllgütern.

Bei einem mit Inliner ausgestatteten Spundfass kommt das flüssige Füllgut nicht mit dem Fassinneren, sondern nur mit dem Inneren des Inliners in Kontakt. Für eine Wiederverwendung von gebrauchten zumeist wertvollen Spundfässern ist lediglich ein Austausch des benutzten vergleichsweise preiswerten Inliners bzw. Foliensacks erforderlich.

Die Erfindung ist vorzugsweise auf ein bestimmtes Kunststoff-Spundfass ausgerichtet, kann aber grundsätzlich auch auf andere Kunststoffbehälter wie z. B. Deckelfässer mit 2 Spunden im Fassdeckel, Fassetts mit seitlichen Handgriffen oder Kanister mit oberem Handgriff angewendet werden.

Das Spundfass aus thermoplastischem Kunststoff mit eingesetztem aus dünnwandiger Kunststoff-Folie bestehendem Inliner umfasst eine zylinderförmige Fasswandung, einen scheibenförmigen Unterboden und einen scheibenförmigen Oberboden, in dem zwei gleichgroße, mittels Spundverschluss verschließbare Spundstutzen angeordnet sind, wobei der eine Spundstutzen als Einfüll- und Entleerungs-Spundstutzen und der andere Spundstutzen als Ent- und Belüftungs-Spundstutzen ausgebildet ist, in welchen jeweils ein entsprechender Einfüll- und Entleerungs-Inlinerstutzen und ein Ent- und Belüftungs-Inlinerstutzen des Inliners befestigt ist. Dabei ist der Spundverschluss für den Ent- und Belüftungs-Spundstutzen mehrteilig ausgebildet mit wenigstens einem Adapterring, einer den Adapterring umschließenden bzw. übergreifenden Überwurf- oder Ringmutter, die jeweils beide mit einer zentralmittigen Durchgangsöffnung versehen sind, und mit weiterhin einem zentralmittigen Spundstopfen, der in die zentralmittige Durchgangsöffnung des Adapterringes eingeschraubt ist. Der Adapterring ist fest am oberen Ende des Ent- und Belüftungs-Spundstutzen des Inliners angeschweißt und über einen Flanschring von der aufgeschraubten Ringmutter im Ent- und Belüftungs-Spundstutzen des Spundfasses fixiert.

### Problematik:

Für verschiedene flüssige Füllguter müssen bei der Auswahl der Verpackung, z. B. bei einem Spundfass mit eingesetztem mehrschichtigem Inliner die für das jeweilige Füllgut erforderlichen Barriereeigenschaften des Inliners gewählt werden. Ein empfindliches flüssiges Füllgut kann z. B. durch eindiffundierenden Sauerstoff beeinflusst und geschädigt werden. Mehrschichtige Inliner mit Barriereeigenschaften sind aber vergleichsweise teuer und besitzen nur eine geringe Schock-Reißfestigkeit. Sie können durch andauernde dynamische Wechselbelastungen, wie sie beim Transport von Flüssigkeitsbehältern durch das hin- und herschwappende Füllgut ständig auftreten, und die zu einem ständigen Bewegen der nur an den Inlinerstutzen aufgehängten Inlinerfolie im Luftraum oberhalb der flüssigen Füllgutsäule führen, leicht an Knickfalten undicht werden oder insbesondere im Bereich der Inliner-stutzen einreißen.

### Stand der Technik:

Behälter mit eingesetztem Kunststoffinliner zur Vermeidung des Inkontaktkommes des Füllguts mit der Behälterinnenwandung sind als solche bekannt. Die Druckschrift US 4 993 579 A offenbart einen Behälter bestehend aus einer im Wesentlichen starren Umhüllung und einem Inliner in Form einer elastischen Blase, die bei Befüllung das Volumen der Umverpackung ausfüllen kann. Um zu verhindern, dass sich die Blase bei Entleerung des Behälters vor die Entleerungsöffnung bewegt und die Entleerung behindert, ist die Blase an einem von der Öffnung beabstandeten Punkt an der Umhüllung fixiert. Bei Befüllung kann die elastische Blase das Behälterinnere weitgehend ausfüllen. Die Nähe der Blase zu den Behälteraußenwänden erhöht die Stabilität. Ein solcher Aufbau eignet sich nicht für Mehrschichtfolien mit Barriereeigenschaften, die typischerweise nicht so elastisch sind, dass sie sich bei Befüllung an die Behälteraußenwände hinreichend anlegen.

WO 94/ 26 603 A1 beschreibt eine Spundfass-Inliner-Kombination, bei der eine zusätzliche Montageöffnung von mindestens 80 mm erforderlich ist. Somit handelt es sich nicht um ein Standardgebinde, das ohne weiteres auf den vorhandenen Abfüllanlagen und Abpumpanlagen eingesetzt werden kann. Die zusätzliche, nicht dem Standard entsprechende Öffnung bringt erhöhte Kosten mit sich. Darüber hinaus ist eine weitere potentielle Undichtigkeit der Umverpackung damit realisiert.

Der Inliner wird hier nicht an der Fassinnenwand fixiert. Somit bestünde auch hier bei Einsatz eines Mehrschichtinliners mit Barriereeigenschaften wegen der dynamischen Wechselbelastungen beim Transport einerseits und der geringen Schock-Reißfestigkeit dieser Inliner andererseits die Gefahr von Undichtigkeiten an Knickfalten bzw. Rissen im Bereich des Inlinerstutzens.

Schließlich ist aus der Druckschrift US 5,217,138 die Verwendung eines zylinderförmigen Inliners aus dünner Kunststoff-Folie in einem Spundfass mit einem Einfüll- und Entnahme-Spundstutzen und einem Ent- und Belüftungs-Spundstutzen im Oberboden bekannt. Dabei geht es um die Fixierung der beiden Inlinerstutzen in den Spundstutzen des Spundfasses. Ein Inlinerstutzen ist mit einer angeschweißten Ringhülse bzw. einem Adapterring versehen, der von oben in den Ent- und Belüftungs-Spundstutzen des Fasses eingesetzt und fixiert wird. Durch diesen Spundstutzen hindurch muss auch der aufgerollte Inliner in das Fassinnere eingebracht werden. Nach Einsetzen des Inliners muss das Fass so lange hin- und hergerollt werden, bis der zweite Inlinerstutzen mittels eines Drahtes oder ä. durch den gegenüberliegenden Fass-Spundstutzen herausgeangelt und an diesem durch Festklemmung befestigt werden kann. Danach hängt der Inliner schlaff an den beiden Inliner-Spundstutzen im Fass. Der Zwischenluftraum zwischen Inliner und FassInnenwandung kann nach Einsetzen des Inliners nicht entlüftet werden, es sei denn der Fasskörper hat an irgendeiner Stelle einen weiteren verschließbaren Spundstutzen bzw. eine weitere verschließbare Fassöffnung. Bei Befüllung des Spundfasses durch den Einfüll- und Entnahme- Spundstutzen kann im gegenüberliegenden Ent- und Belüftungs-Spundstutzen ein kleinerer zentralmittig in der Ringhülse angeordneter Spundstopfen herausgeschraubt werden, damit die durch das Füllgut verdrängte Luft aus dem Inneren des Inliners entweichen kann. Für das Entweichen von Zwischenraumluft muss bei einer Befüllung des Fasses eine weitere separate Entlüftungsöffnung vorgesehen sein, die eine schnelle Entlüftung gewährleistet, anderenfalls kann es leicht passieren, dass bei automatischen Abfüllanlagen die Fässer überlaufen, weil die vorgesehene Füllgutmenge nicht schnell genug ins Fass gelangen kann.

### Aufgabe:

Der vorliegenden Erfindung liegt die Aufgabe zugrunde, die aufgezeigten Nachteile des Standes der Technik zu beheben und ein bestehendes Standard-Spundfass mit einem auswechselbaren Inliner derart auszustatten, dass die Anwender bzw. Benutzer wie insbesondere die Abfüller und Entleerer, keinen Unterschied und keine Nachteile bei der Handhabung im Vergleich zu einem gleichen Standard-Spundfass ohne Inliner feststellen und das mit Inliner ausgestattete Spundfass ohne irgendwelche Zusatzmaßnahmen auf den vorhandenen Abfüllanlagen und Abpumpanlagen eingesetzt werden kann.

### Lösung:

Diese Aufgabe wird mit den speziellen Merkmalen des Patentanspruchs 1 gelöst. Die Merkmale in den Unteransprüchen beschreiben weitere vorteilhafte Ausgestaltungsmöglichkeiten des erfindungsgemäßen Spundfasses mit Inliner.

Die vorgeschlagene technische Lehre vermittelt auf an sich einfache Weise, wie die Nachteile von bekannten Spundfässern mit Inliner überwunden werden können und sich die Handhabung der mit Inliner ausgestatteten Fässer für den Abfüller und den Entleerer in keiner Weise von der Handhabung mit normalen Fässern unterscheidet.

Dies wird in konstruktiver Weise durch folgende Merkmale erreicht:
- beide Spundstutzen sind als standardisierte 2" Spundstutzen mit Innengewinde mit einer BCS 70 x 6 -Verschraubung und einem darunterliegenden Dichtungsbett ausgebildet,
- der Spundverschluss für den Einfüll- und Entleerungs-Spundstutzen ist als handelsüblicher standardisierter 2"-Spundstopfen mit Außengewinde mit einer BCS 70 x 6 -Verschraubung und darunterliegendem Dichtungsring ausgebildet, der gegen das Dichtungsbett im Einfüll- und Entleerungs-Spundstutzen abdichtet,
- der Einfüll- und Entleerungs-Spundstutzen weist unterhalb des Innengewindes an seiner engsten Durchgangsstelle im Stutzenhals eine geglättete, ringflächenförmige Schweißbett-Innenfläche auf, an die das obere Ende des Einfüll- und Entleerungs-Inlinerstutzen des Inliners fest angeschweißt ist,
- der in die zentralmittige Durchgangsöffnung des Adapterringes eingeschraubte Spundstopfen ist als handelsüblicher standardisierter ¾"-Spundstopfen mit Außengewinde und darunterliegendem Dichtungsring ausgebildet,
- der von der aufgeschraubten Ringmutter übergriffene Flanschring des Adapterringes weist auf seiner Unterseite am Außenrand einen umlaufenden Dichtungsring auf und dichtet das Fassinnere gegen ein Dichtungsbett unterhalb des Innengewindes im Ent- und Belüftungs-Spundstutzen ab.

In Ausgestaltung der Erfindung ist vorgesehen, dass die aufgeschraubte Ringmutter von oben von einer aufgeschnappten oder aufgeclinchten Sicherungskappe abgedeckt ist, die ebenfalls mit einer zentralmittigen Durchgangsöffnung versehen ist und durch diese Durchgangsöffnung hindurch einen freien Zugang auf den zentralmittig im Adapterring eingeschraubten ¾"-Spundstopfen gewährt.

Diese konstruktive Ausgestaltung der Erfindung sieht vor, dass bei gelöster bzw. ausgeschraubter Ringmutter der Adapterring mit seinem auf der Unterseite des Flanschringes umlaufenden Dichtungsring mitsamt fest eingeschraubtem zentralmittigem ¾"-Spundstopfen mittels eines durch eine Vakuumglocke geführtes eingreifenden Ziehwerkzeuges leicht nach oben anhebbar ausgebildet ist und zwischen Dichtungsring und Dichtungsbett ein Ringspalt ausgebildet ist, durch den mittels einer an die Vakuumglocke angeschlossenen Vakuumpumpe im Zwischenluftraum zwischen Inlineroberfläche und Fassinnenwandung ein Vakuum ziehbar ist.

Das erfindungsgemäße Spundfass zeichnet sich weiterhin dadurch aus, dass nach erfolgter Vakuumziehung, wenn die Inlineroberfläche nahezu vollständig bzw. vollflächig an der Fassinnenwandung anliegt, der Adapterring mitsamt fest eingeschraubtem zentralmittigem ¾"-Spundstopfen mittels des durch die Vakuumglocke geführten Ziehwerkzeuges nach unten führbar und der auf der Unterseite des Adapter-Flanschringes umlaufende Dichtungsring fest und gasdicht auf das im Ent- und Belüftungs-Spundstutzen unterhalb des Innengewindes angeordnete Dichtungsbett pressbar ausgebildet und nachfolgend von der von oben fest aufgeschraubten Ringmutter dauerhaft in gasdichter Position fixiert ist. Durch das dauerhafte Vakuum im Zwischenluftraum zwischen Inliner und FassInnenwandung bleibt die Inlinerfolie auch bei länger andauernden dynamischen Wechselbelastungen, wie sie beim Transport von Flüssigkeitsbehältern durch das Hin- und Herschwappen des Füllgut ständig auftreten, wie "angesogen" in Kontakt mit der Fassinnenwandung und es treten keine Faltungen und Bewegungen der Inlinerfolie im Luftraum oberhalb der flüssigen Füllgutsäule auf. Ein undicht-werden oder Einreißen der Inlinerfolie tritt nicht mehr auf. Durch die Vakuum-Fixierung der Inlinerfolie an der Fassinnenwandung sitzt der Inliner vollflächig wie eine "zweite Haut" auf der Fassinnenwandung; dadurch wird auf vorteilhafte Weise auch der Einsatz von preiswerten Inliner-Folienmaterialien mit geringerer Reißfestigkeit ermöglicht.

In weiterer Ausgestaltung der Erfindung ist vorgesehen, dass nach erfolgter Vakuumziehung, wenn die Inlineroberfläche nahezu vollflächig an der inneren Oberfläche der Fassinnenwandung anliegt, bei herausgeschraubtem 2"-Spundstopfen auf der Einfüllseite und herausgeschraubtem ¾"- Spundstopfen auf der Entgasungsseite, mittels z. B. eines ggfs. entsprechend gekrümmten Blasrohres Heißluft derart in das Fassinnere bzw. in das Innere des Inliners, insbesondere im oberen Bereich der Fasswandung und des Oberbodens, eingeblasen wird, dass eine thermische Aktivierung der Inlinerfolie bewirkt wird und die äußere Oberfläche des Inliners leicht gegen die innere Oberfläche der Fasswandung geklebt ist. Zweckmäßigerweise ist dabei die Einblasung der Heißluft in das Innere des Inliners für einen verbesserten Klebeeffekt bei erhöhtem Druck erfolgt.

Damit sich die Handhabung des erfindungsgemäßen Spundfasses mit Inliner für die Abfüller und Entleerer nicht von der Handhabung eines gleichen Spundfasses ohne Inliner unterscheidet, ist erfindungsgemäß vorgesehen, dass der zentralmittig angeordnete ¾"-Spundstopfen - bei einer fest eingeschraubten Ringmutter für eine Befüllung des Spundfasses mit flüssigem Füllgut in einer automatischen Abfüllanlage mittels Druck-Füllrohr und für eine Entnahme des flüssigen Füllgutes in einer automatischen Entleerungsanlage mittels Unterdruck-Saugrohr durch den gegenüberliegenden Einfüll- und Entleerungs-Spundstutzen - durch die mit zentralmittiger Durchgangsöffnung versehene Sicherungskappe frei zugänglich ist und manuell mittels Schraubwerkzeug oder automatisch mittels Schraubautomaten heraus- und wieder einschraubbar ausgebildet ist, wodurch insbesondere auch ein versehentliches Lösen der anpressenden Ringmutter mit Verlust des Vakuums verhindert wird.

In Anspruch 9 wird ein Inliner für das Spundfass offenbart.

Eine vorteilhafte Besonderheit des Inliners besteht darin, dass die Inlinerstutzen derart von der Innenseite her mit einem radial nach innen gerichteten Schweißflanschrand gegen die Inlinerwandung des Inlineroberbodens an- bzw. eingeschweißt und von innen nach außen gekrempelt sind, dass alle vorhandenen Folien-Schnittkanten gegen Füllgut-Kontakt abgedeckt sind und keine Folien-Schnittkante - weder diejenige am Schweiß-Flanschrand der aufgeschweißten Inlinerstutzen noch diejenige an der innenseitigen Begrenzung der Durchgangsöffnungen in der Inlinerwandung - mit dem eingefüllten flüssigen Füllgut in Kontakt gelangt. Dadurch ist sichergestellt, dass keine lösungsmittelhaltigen Füllgüter mit irgendwelchen Folien-Schnittkanten in Kontakt kommen können, wodurch die zwischen den Barriereschichten eingebrachten klebstoffartigen Haftvermittlerschichten angegriffen und aufgelöst werden könnten, so dass insbesondere bei länger andauerndem Transport von mit mehrschichtigen Inlinern ausgestatteten Spundfässern ein nachteiliges Ablösen der Folienschichten mit Verlust der Barriereeigenschaften und nachfolgender Füllgutschädigung erfolgen könnte.

Die Erfindung bezieht sich auch auf ein Verfahren zur Herstellung des Spundfasses gemäß Anspruch 14.

Das Verfahren zeichnet sich durch folgende Verfahrensschritte aus :
- Bereitstellen eines handelsüblichen Standard-Spundfasses mit zwei 2"-Spundstutzen mit 70 x 6 -Verschlüssen und einem handelsüblichen 2"-Spundstopfen für einen 70 x 6 Verschluss und einem handelsüblichen ¾"-Spundstopfen für einen 70 x 6 Verschluss, wobei der eine 2"-Spundstutzen mit dem 2"-Spundstopfen als Einfüll- und Entnahmespund für das flüssige Füllgut dient und der andere 2"-Spundstutzen als Entlüftungs- und Belüftungsspund für das Füllvolumen in Inneren des Inliners und für den Zwischenluftraum zwischen der äußeren Oberfläche des Inliners und der Fassinnenwandung dient,
- Bereitstellen eines Inliners mit zwei unterschiedlich großen Inliner-Spundstutzen, wobei der größere Spundstutzen für den 2"-Spundstutzen mit dem 70 x 6 Verschluss vorgesehen und etwas länger mit einem zugeschweißten freien Ende ausgebildet ist, während am Ende des kürzeren etwas kleineren Spundstutzen ein hohler hülsenartiger Adapterring mit unterem Dichtungsring angeschweißt ist,
- Aufrollen des Inliners zu einer schlanken Rolle, wobei der angeschweißte Adapterring oben an der Rolle angeordnet ist,
- Einsetzen der schlanken Rolle durch den Entlüftungs- und Belüftungsspund und Fixieren des Adapterringes mittels einer den Adapterring umschließenden Ringmutter mit einer zentralmittigen Durchgangsöffnung und mit einem Außengewinde für den 70 x 6 Verschluss im 2"-Spundstutzen des Entlüftungs- und Belüftungsspundes, wobei der Adapterring mit unterem Dichtungsring den Zwischenluftraum zwischen der äußeren Oberfläche des Inliners und der Fassinnenwandung im 2"-Spundstutzen abdichtet,
- Einblasen von Druckluft in den Entlüftungs- und Belüftungsspund bis der Inliner vollständig aufgeblasen ist und der zugeschweißte größere Inliner-Spundstutzen aus dem gegenüberliegenden Einfüll- und Entnahmespund herausschaut,
- Abschneiden des zugeschweißten freien Endes des größeren Inliner-Spundstutzens und Umstülpen des Inliner-Spundstutzens nach außen über den 2"-Spundstutzen des Spundfasses,
- radiales Einschweißen des Inlinerstutzens unterhalb des Innengewindes im 2"-Spundstutzen und passgenaues Abschneiden des überschüssigen bzw. überstehenden Inlinerstutzens oberhalb der Schweißringfläche unterhalb des Innengewindes,
- Aufsetzen einer Vakuumglocke auf den Entlüftungs- und Belüftungsspund und bei gelöster Ringmutter und angehobenem Adapterring mittels einer an die Vakuumglocke angeschlossenen Unterdruckpumpe sämtliche Luft aus dem Zwischenluftraum zwischen der äußeren Oberfläche des Inliners und der Fassinnenwandung absaugen und ein Vakuum ziehen bis die äußere Oberfläche des Inliners vollflächig an der Fassinnenwandung anliegt,
- Festziehen der Ringmutter und Anpressen des Adapterringes mit unterem Dichtungsring im 2"-Spundstutzen zum dauerhaften Erhalt des Vakuums zwischen Inliner und Fassinnenwandung,
- Einschrauben des 2"-Spundstopfens in den 2"-Spundstutzens des Einfüll- und Entnahmespundes und Einschrauben des ¾"-Spundstopfens in den hülsenartigen, mit einem Innengewinde versehenen Adapterring.

Um ein versehentliches Lösen oder Herausschrauben der Ringmutter mit Verlust des Vakuums mit Sicherheit zu verhindern, wird auf den 2"-Spundstutzen eine Sicherungskappe mit zentralmittiger Durchgangsöffnung aufgesetzt, die freien Zugriff auf den zentralmittigen ¾"-Spundstofen gewährt.

In zweckmäßiger Ausgestaltung des Verfahren nach obigen Verfahrensschritten ist vorgesehen, dass während des Vakuumziehens durch den Entlüftungs- und Belüftungs-Spundstutzen durch den gegenüberliegenden Befüll- und Entleerungs-Spundstutzen Druckluft in das Innere des Inliner geblasen wird, so dass die Inlinerfolie des Inliners - insbesondere im Oberbodenbereich um die eingesenkten Spundgehäuse - vollflächig an die Innenwandung des Spundfasses gedrückt und sämtliche Zwischenraumluft ausgedrückt wird. Dabei wird die eingeblasene Druckluft zur thermischen Aktivierung der Inlinerfolie als Heißluft eingeblasen, so dass die Außenseite der Inlinerfolie einen Klebeffekt entfaltet und an der Innenwandung des Spundfasses anhaftet bzw. wieder ablösbar anklebt.

Für eine Wiederaufarbeitung von gebrauchten Spundfässern mit Inliner ist es für die Rekonditionierbetriebe sehr vorteilhaft, wenn zum Herausnehmen des Inliners aus dem Fassinneren bei gelöster Ringmutter und angehobenem Adapterring durch den Ringspalt zwischen Adapter-Dichtungsring und Spundstutzen-Dichtungsbett z. B. mittels aufgesetzter Druckluftglocke und angeschlossener Druckluftleitung Druckluft in den Zwischenluftraum zwischen Inlineroberfläche und Fassinnenwandung eingeblasen wird, so dass sich die an der Fassinnenwandung anhaftende bzw. angeklebte Inlineroberfläche ablöst. Zwechmäßigerweise wird dabei durch den Befüll- und Entleerungs-Spundstutzen z. B. mittels aufgesetzter Vakuumglocke ein Vakuum im Inneren des Inliners gezogen, bis dass dieser vollständig von der Fassinnenwandung abgelöst ist.

Dann wird auf einfache Weise der im Befüll- und Entleerungs-Spundstutzen angeschweißte Inlinerstutzen direkt unterhalb der Schweißringfläche zuerst abgeschnitten und um ein Stück aus dem Spundstutzen herausgezogen und z. B. mittels einer Abschweißung dicht verschlossen, wodurch eine Verunreinigung des Fassinneren vermieden wird. Danach wird der gesamte Inliner mit Adapterring durch den gegenüberliegenden Entlüftungs- und Belüftungsspund aus dem Fassinneren herausgezogen. Nach Kalibrierung der Schweißringfläche im Einfüll- und Entnahmespund für das radiale Einschweißen des größeren Inlinerstutzens kann sofort ein neuer Inliner eingesetzt und fixiert werden.

Gebrauchte Behälter für den Transport von Flüssigkeiten wie z. B. Palettencontainer, Spundfässer und Kanister werden in qualifizierten Rekonditionierungsbetrieben fachmännisch für eine Wiederverwendung aufgearbeitet, dazu gehört insbesondere eine Reinigung, Prüfung, Qualitätskontrolle sowie auch das Einsetzen von neuen Inlinern. Wenn bei einem Spundfass der flexible dünnwandige Einfüll- und Entnahmestutzen des Inliners fest in den stabilen Einfüll- und Entnahmestutzen des stabilen Kunststoff-Spundfassstutzen eingeschweißt ist, so ist diese Fixierung des Inliners im Spundfass für die Kunden und Benutzer, also die Abfüller und Entleerer des flüssigen Füllgutes, am einfachsten zu handhaben, denn es kann sich beim Auf- und Abschrauben von Schraubkappen, Spundstutzen, Entnahmearmaturen oder Rührwerkzeugen kein Verdrehen der flexiblen Einfüll- und Entnahmestutzen des Inliners mit Faltenbildung und Undichtigkeiten ergeben, wie es bisher bei üblicher Befestigung von Inliner-Stutzen mit einfachem Umstülpen und Festklemmen auf den starren Behälterstutzen häufig aufgetreten ist. Zur Belüftung des Fass- bzw. Inliner-Inneren braucht wie bisher üblich beim gegenüberliegenden Entlüftungs-spund nur der zentral angeordnete ¾"-Spundstopfen (aus dem Adapterring) herausgeschraubt zu werden.

Die Erfindung wird nachfolgend anhand eines in den Zeichnungen schematisch dargestellten Ausführungsbeispiels näher erläutert und beschrieben. Es zeigen:
- Figur 1: in perspektivischer Ansicht ein erfindungsgemäßes Spundfass mit eingesetztem Inliner,
- Figur 2: in Seitenansicht den eingesetzten Inliner für das Spundfass gemäß Fig. 1,
- Figur 3: in Seitenansicht den aufgerollten Inliner vor dem Einsetzen in das Spundfass,
- Figur 4: eine Teilschnitt-Ansicht um den oberen Bereich des Kunststoff-Spundfasses mit einem 2"-Spundstutzen und eingeschweißtem Inlinerstutzen,
- Figur 5: eine Teilschnitt-Ansicht eines Entlüftungs- und Begasungs-Spundstutzens mit herausgedrehtem ¾"-Spundstopfen und
- Figur 6: eine weitere Teilschnitt-Ansicht um den Bereich des Entlüftungs- und Begasungs-Spundstutzens mit aufgesetzter Vakuum-Glocke

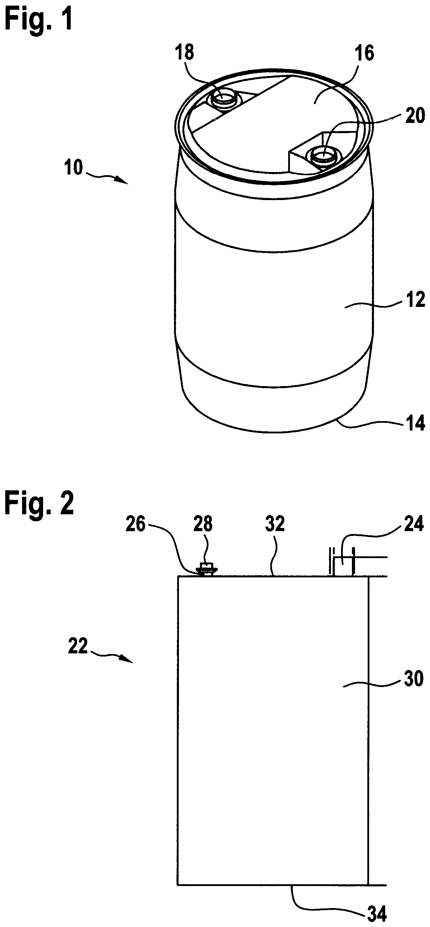

In Figur 1 ist als bevorzugtes Ausführungsbeispiel mit der Bezugsziffer 10 ein Spundfass aus thermoplastischem Kunststoff bezeichnet, das mit einem eingesetzten, aus dünnwandiger Kunststoff-Folie bestehenden Inliner 22 ausgestattet ist. Wie erwähnt könnte die Erfindung gleichfalls auf andere Kunststoff-Behälter wie Kanister, Fassetts, Deckelfässer mit Spunddeckel oder Palettencontainer angewendet werden.

Für einen Einsatz bzw. für eine Verwendung von gefährlichen Füllgütern erfüllt das Spundfass 10 besondere Prüfkriterien und ist mit einer entsprechenden amtlichen Zulassung versehen. Das Spundfass 10 ist in einer am häufigsten verwendeten Volumengröße von 220 I besonders für chemische Produkte wie auch für Lebensmittel geeignet. Seine Hauptbestandteile sind eine zylinderförmige Fasswandung 12, ein scheibenförmiger Unterboden 14 und einen scheibenförmiger Oberboden 16, in dem zwei gleichgroße, mittels Spundverschluss verschließbare Spundstutzen 18, 20 angeordnet sind. Derartige Spundfässer weisen eine Höhe von ca. 935 mm und einen Durchmesser von ca. 581 mm auf, sind vorzugsweise im Blasformverfahren hergestellt und bestehen in der Regel aus HDPE-Kunststoffmaterial. Das Fassgewicht liegt bei ca. 8,2 kg. Moderne Fässer bestehen aus drei Schichten, wobei nur eine dünne Außenschicht (20 %) blau eingefärbt ist und eine dünne hochreine Innenschicht (20 %) aus Neumaterial besteht, während die mittlere Stützschicht (60 %) aus Regranulat, d. h. aus gebrauchtem wieder aufgearbeitetem Kunststoffmaterial besteht.

Bei dem erfindungsgemäßen Spundfass 10 ist der eine Spundstutzen als Einfüll- und Entleerungs-Spundstutzen 18 und der andere Spundstutzen als Ent- und Belüftungs-Spundstutzen 20 ausgebildet. Beide Spundstutzen sind als 2"-Spundstutzen mit einer BCS 70 x 6 -Verschraubung ausgebildet.

In diesen Fass-Spundstutzen ist ein entsprechend zugeordneter Einfüll- und Entleerungs-Stutzen 24 und ein Ent- und Belüftungs-Stutzen 26 des Inliners 22 befestigt.

In Figur 2 ist der Inliner 22 in Seitenansicht dargestellt. Seine Form ist der Innenwandung des Fasses angepasst und besteht aus einer zylinderförmigen Inlinerwandung 30, einem scheibenförmigen Inlineroberboden 32 und einem scheibenförmigen Inlinerunterboden 34. Im Oberboden 32 des Inliners 22 ist an entsprechender Position der im Durchmesser etwas größerer und längerer ausgebildete Inlinerstutzen 24 für Inlinerstutzen 26 des Spundfasses und gegenüberliegend der etwas kleinere und kürzere Inlinerstutzen 26 für den Ent- und Belüftungs-Spundstutzen 20 des Spundfasses 10 angeordnet. Auf den kürzeren Inlinerstutzen 26 ist ein Adapterring 28 aufgeschweißt, der in den Ent- und Belüftungs-Spundstutzen 20 eingesetzt wird.

Dabei sind die flexiblen Inlinerstutzen 18,20 aus dem gleichen Folienmaterial mit den gleichen Barriereeigenschaften wie das Folienmaterial des flexiblen Inliners 22 hergestellt, um nachteilige kunststoffmaterialdurchdringende Diffusionsvorgänge auszuschließen. Bei einem mehrschichtigen asymmetrischen Folienaufbau der Inlinerfolie ist es wichtig, dass bei der ringförmigen Aufschweißung des Schweiß-Flanschrandes der Inlinerstutzen auf die Inlinerwandung jeweils das gleiche Folienmaterial bzw. die gleiche äußere Folienschicht gegeneinander verschweißt ist.

Der Inliner 22 weist für ein Füllvolumen von 220 l eine Höhe von ca. 930 mm und einen Durchmesser von ca. 580 mm auf. Die Durchmesser betragen für den kleineren Inlinerstutzen 26 ca. 25 mm und für den größer und länger ausgebildeten Inlinerstutzen 26 ca. 58 mm. Aufgrund seiner Dünnwandigkeit ist der Inliner nicht selbst formstabil sondern sehr flexibel, nachgiebig und anpassungsfähig. Die Wanddicke der mehrschichtigen Inliner-Verbundfolie beträgt ca. 100 µm bis 300 µm, vorzugsweise ca. 150 µm. Mit einem Flächengewicht von ca. 100 - 150 g/m² ergibt sich für einen 220 I Inliner-Sack ein Materialgewicht von ca. 0,15 - 0,3 kg. Dabei können die hauchdünnen Verbundschichten aus verschiedenen Materialien wie z. B. HDPE / LDPE / EVOH / PET / PA / PP oder SiOx mit dazwischen angeordneten Schichten aus Haftvermittler bestehen und/oder mit einer Glasfaser- oder Gewebeverstärkung versehen sein. Je nach Anwendungsfall ist die Verbundfolie mit Barriereschichten z. B. gegen Kohlenwasserstoff-, Sauerstoff-, Aromastoff- oder Wasserdampf-Diffusion ausgestattet und ggfs. mit einer aseptischen bakterientötenden Beschichtung oder einer aufgedampften silberhaltigen oder aluminiumhaltigen Metallfolie versehen.

Konstruktiv sind die Inlinerstutzen 24, 26 mit einem radial nach innen weisenden Schweißflanschrand derart von der Innenseite her gegen die Inlinerwandung des Inlineroberbodens 32 eingeschweißt und danach von innen nach außen gekrempelt, dass alle vorhandenen Folien-Schnittkanten gegen Füllgut-Kontakt abgedeckt sind und keine Folien-Schnittkante - weder diejenige am Schweiß-Flanschrand der aufgeschweißten Inlinerstutzen 24,26 noch diejenige an der innenseitigen Begrenzung der Durchgangsöffnungen in der Inlinerwandung - mit dem eingefüllten flüssigen Füllgut in Kontakt gelangt. Dadurch bleiben die vollen Barriereeigenschaften auch bei langen Transport- und Lagerzeiten der Spundfässer voll erhalten und eine diffusionsbedingte Schädigung von empfindlichen Füllgütern wird vermieden.

Für die Realisierung des besonderen Inliners ist es auf jeden Fall wichtig, dass die ringförmige Aufschweißung der beiden Inliner- Schweißflanschränder auf die Innenwandung des Inlineroberbodens fertigungstechnisch vor dem vollständigen und endgültigen Verschweißen der Zuschnittsteile der mehrschichtigen Inliner-Folie für den geschlossenen Inliner-Korpus erfolgt ist, sonst ist ein Einschweißen der Folienstutzen von Innen an die Innenwandung des Inlineroberbodens nicht mehr.

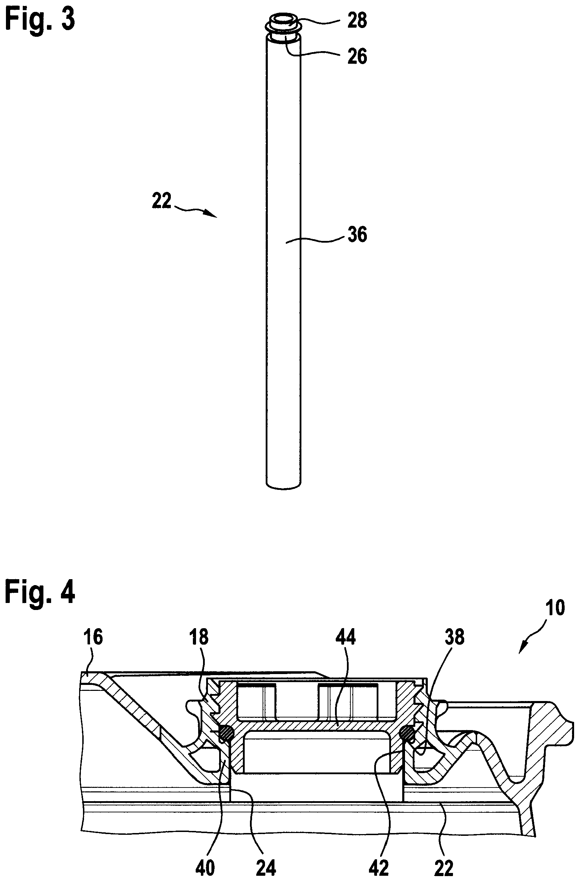

Um den Inliner 22 aus flexibler dünnwandiger Mehrschichtfolie in das Fassinnere einbringen zu können, ist dieser zu einer schlanken stangenförmigen Rolle 36 aufgewickelt - wie in Figur 3 zu erkennen ist. Dabei steht am oberen Ende der kleinere Inlinerstutzen 26 mit dem aufgeschweißten Adapterring 28 hervor, während der größere Inlinerstutzen 24 mit eingerollt und hier nicht sichtbar ist. Als wichtiges Merkmal für den Rohling des Inliners weist der Inlinerstutzen 24 mit dem größeren Durchmesser vor dem Einsetzen in das Spundfass 10 eine Länge von wenigstens seinem doppelten Durchmesser auf und ist an seinem freien Ende abgeschweißt bzw. gasdicht verschlossen.

Die Inliner-Rolle 36 wird durch den Ent- und Belüftungs-Spundstutzen 20 des Spundfasses 10 geführt und der Adapterring 28 wird im Spundstutzen 20 befestigt wie nachfolgend näher erläutert wird. Nachdem der Adapterring 28 im Ent- und Begasungs-Spundstutzen 20 befestigt ist, wird durch den hohlen Adapterring 28 im kleineren Inlinerstutzen 26 langsam Druckluft in den Inliner eingeblasen, so dass sich dieser entfaltet und vollständig aufgeblasen wird bis der gegenüberliegende größere, noch zugeschweißte Inlinerstutzen 24 von selbst von unten aus dem zugehörigen Befüll- und Entleerungs-Spundstutzen 18 des Spundfasses 10 herausschaut.

In Figur 4 ist der obere Bereich des Spundfasses 10 mit dem Einfüll- und Entleerungs-Spundstutzen 18 für einen BCS 70 x 6 Standard-Verschluss dargestellt. Der 2"-Spundstutzen 18 weist - wie auch der gleichartig ausgeführte Spundstutzen 20 - ein als Grobgewinde ausgelegtes Innengewinde auf; direkt unterhalb des Innengewindes befindet sich ein im Durchmesser verjüngtes Dichtungsbett 38 für den am 2"-Spundstopfen 44 sitzenden Dichtungsring. Unterhalb des Innengewindes weist der Einfüll- und Entleerungs-Spundstutzen 18 einen im Durchmesser reduzierten Stutzenhals 40 mit einer ringförmigen Innenfläche 42 als Schweißbettfläche für den einzuschweißenden 2"-Inlinerstutzen auf. Die ringförmige Innenfläche 42 im Stutzenhals 40 ist als Schweißbettfläche geglättet ausgebildet. Die zur Kalibrierung der Innenfläche 42 vorgenommene Glättung erfolgt z. B. mittels eines Hohnwerkzeuges, einer Reibahle oder eines Schälmessers zweckmäßigerweise in einer Überkopfpositionierung des Fasses, wobei herabfallende abgeschälte Kunststoffpartikel nach unten abgesaugt werden, ggfs. wird gleichzeitig durch den anderen Spundstutzen 20 Druckluft in den Fasskörper eingeblasen, so dass auf jeden Fall ausgeschlossen ist, dass abgeschälte Kunststoffpartikel in den Fasskörper hineingelangen können.

Wenn der Inliner 22 in das Spundfass 10 eingesetzt und derart aufgeblasen ist, dass der noch zugeschweißte Inlinerstutzen 24 aus dem Spundstutzen 18 herausschaut, wir der Inlinerstutzen 24 strammgezogen, oben aufgeschnitten und über den Spundstutzen 18 gestülpt. Dann wird der Inlinerstutzen 24 mittels Expansions-Schweißverfahren in radialer Richtung fest an die ringförmige Innenfläche 42 (Schweißbettfläche) an- bzw. eingeschweißt und passgenau abgeschnitten, so dass ein handelsüblicher 2"-Spundstopfen 44 eingeschraubt und mittels seines Dichtungsringes gegen das am unteren Ende des Innengewindes angeordnete Dichtungsbett 38 bzw. Dichtungsgegenlager direkt oberhalb der Schweißbettfläche abdichten kann. Außer der Kalibrierung der Schweißbettfläche werden an dem Standard-Spundfass 10 keinerlei Maßnahmen oder Anpassungen vorgenommen. Die vorteilhafte Handhabung des anwenderfreundlichen Spundfasses mit Inliner gemäß der vorliegenden Erfindung wird ganz wesentlich durch die besondere konstruktive Ausgestaltung und Funktionsweise des Einsatzes für den Be- und Entlüftungs-Spundstutzen 20 realisiert.

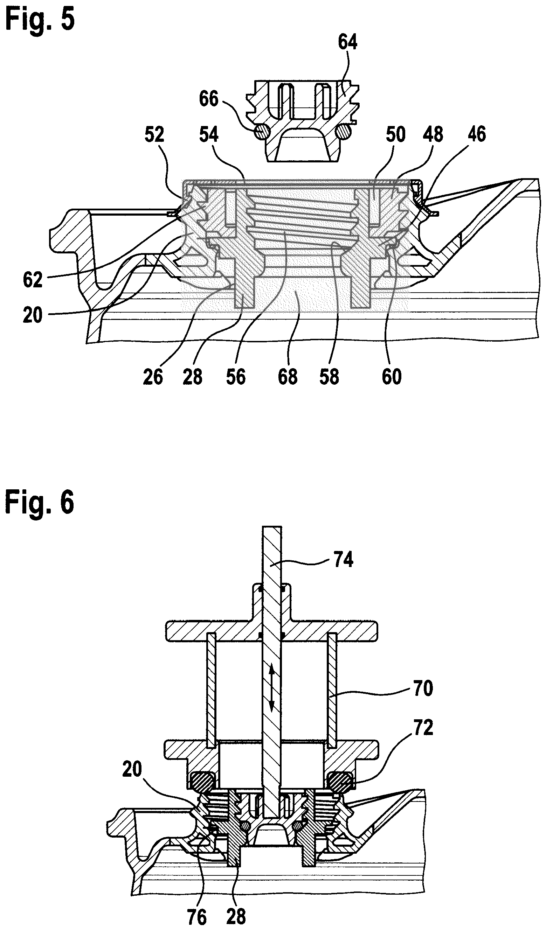

Wie in Figur 5 dargestellt ist, besteht der Verschluss-Einsatz für den 2"-Belüftungs- und Entlüftungs-Spundstutzen 20 aus wenigstens drei Teilen. Dies sind der innen hohle Adapterring 28 mit äußerem, etwa mittig angeordnetem radial abstehenden Flanschring 46, eine den hülsenförmigen Adapterring 28 oberhalb des Flanschringes 46 umschließende Ringmutter 48 mit Außengewinde und zentraler Durchgangsöffnung 50 und eine den oberen Teil des Be- und Entlüftungs-Spundstutzens 20 außenseitig und von oben überdeckende Sicherungskappe 52 mit zentraler Durchgangsöffnung 54.

Der hohle hülsenförmige Adapterring 28 ist im oberen Bereich seiner Durchgangsöffnung mit einem Innengewinde 56 ausgestattet. Am unteren Ende ist das als Grobgewinde ausgelegte Innengewinde 56 mit einem im Durchmesser verringerten Dichtungsbett 58 versehen.

Auf der Unterseite des Flanschringes 46 des Adapterringes 28 ist außenseitig ein umlaufender Dichtungsring 60 angeordnet, der vorzugsweise als rechteckförmige Flachdichtung ausgebildet ist, und innerhalb des Spundstutzens 20 - wie beim gegenüberliegenden Spundstutzen 18 - gegen das Dichtungsbett am unteren Ende des Innengewindes oberhalb des durchmesserverkleinerten Stutzenhalses abdichtet. Die Oberseite des Flanschringes 46 des Adapterringes 28 wird von oben von der den oberen Bereich des Adapterringes 28 umschließenden Ringmutter 48 beaufschlagt, deren als Grobgewinde ausgelegtes Außengewinde 62 in das Innengewinde des Spundstutzens 18 eingreift und den Dichtungsring 60 des Adapter-Flanschringes 46 gegen das Dichtungsbett (38) am unteren Ende des Innengewindes des Spundstutzens 20 presst. Unterhalb des Flanschringes 46 ist der schlauchförmige Inlinerstutzen 26 radial von außen an den ringhülsenartigen Adapterring 28 angeschweißt.

In das als Grobgewinde ausgelegte Innengewinde 56 des Adapterringes 28 ist von oben ein kleinerer 3/4" Spundstopfen 64 einschraubbar, der mit seinem Dichtungsring 66 gegen das im Durchmesser verringerte Dichtungsbett 58 des Innengewindes 56 abdichtet.

Wenn der Inliner 22 in den Fasskörper eingesetzt und beide Inlinerspunde in den Spundstutzen des Fasses befestigt sind, wird die Ringmutter 48 fest angezogen, so dass der Dichtungsring 60 gasdicht gegen das Dichtungsbett 58 im Spundstutzen 20 gepresst ist, und der Zwischenluftraum zwischen Inliner und Fassinnenwandung vollkommen luftdicht abgeschlossen ist. Danach wird die Sicherungskappe 52 mit zentraler Durchgangsöffnung 54 von oben auf den Be- und Entlüftungs-Spundstutzen 20 aufgesetzt, wobei dieser in seinem oberen Bereich außenseitig umschlossen wird. Die Sicherungskappe 52 ist vorzugsweise als dünnwandige Kunststoff-Kappe mit lösbarem oder unlösbarem Schnapp-Rast-Verschluss ausgebildet und dient dazu, die Ringmutter 48 zum Fixieren des Adapterringes 56 gegen unbeabsichtigtes oder unsachgemäßes Öffnen zu schützen und nur einen Zugang auf den ¾"-Belüftungsstopfen 38x6 zu gewähren, der beim Befüllen und Entleeren des Spundfasses zu öffnen sein muss.

Bei einer weiteren Ausführungsform ist die Sicherungskappe 52 als dünner unlösbar aufgeclinchter Blechdeckel mit zentraler Durchgangsöffnung 54 ausgebildet, der zusätzlich von einer dünnwandigen geschlossenen Kunststoff-Schutzkappe bzw. -Siegelkappe mit lösbarem Schnapp-Rast-Verschluss abgedeckt ist. Dabei ist die zusätzliche Siegelkappe als Schutz gegen Schmutz und Regenwasser vorgesehen und kann zum Herausdrehen des ¾"-Spund-stopfens leicht abgenommen werden, während der unlösbar aufgesetzte Blechdeckel mit Durchgangsöffnung auf jeden Fall ein versehentliches oder unbefugtes Herausschrauben der Ringmutter verhindert und nur mit einem entsprechenden Werkzeug in den Recyclingbetrieben abgenommen werden kann.

Bei dieser Ausbildung des Be- und Entlüftungs-Spundes 20 ist somit in den größeren 70 x 2 -Verschluss zwischen Spundstutzen-Innengewinde und Ringmutter-Außengewinde ein kleinerer 38 x 6 -Verschluss zwischen Adapter-Innengewinde und ¾"-Spundstopfen-Außengewinde eingesetzt.

Zur Verdeutlichung der Funktionsweise des erfindungsgemäßen Spundfasses 10 ist in Figur 6 dargestellt, wie zur Vakuumierung des Zwischenluftraumes zwischen Inlineroberfläche und Fassinnenwandung eine Vakuumglocke 70 mit Dichtungsring 72 auf den Be- und Entlüftungs-Spund 20 aufgesetzt ist. Zentralmittig in der Vakuumglocke 70 ist ein stangenförmiges Ziehwerkzeug 74 angeordnet, das Auf und Ab bewegt werden kann, wie durch einen Doppelpfeil angedeutet ist. Unten rastet das Ziehwerkzeug 74 in den fest in den Adapterring 28 eingeschraubten ¾"-Spundstopfen 64 ein. Bei gelöster oder herausgeschraubter Ringmutter 48 wird mittels des Ziehwerkzeuges 74 der Spundstopfen 64 mitsamt Adapterring 28 leicht angehoben, so dass die Dichtung 60 am Flanschring 46 des Adapterringes 28 um ein kleines Stückchen vom Dichtungsbett 38 im Spundstutzen 20 abhebt und einen Ringspalt 76 freigibt, durch den die störende Zwischenluft aus dem Zwischenluftraum zwischen Inliner und Fassinnenwandung vollständig abgezogen wird. Nach Beendigung dieses Vorgangs wird zum dauerhaften Erhalt des Vakuums die Ringmutter 48 eingeschraubt und fest angezogen. Dadurch wird der Adapterring 28 mit unterem Dichtungsring 60 fest auf das Dichtungsbett 38 im Spundstutzen 20 gepresst. Danach wird auf den 2"-Spundstutzen 20 noch eine Sicherungskappe 52 mit zentralmittiger Durchgangsöffnung 54 aufgesetzt, die für die Befüller und Entleerer freien Zugriff auf den ¾"-Spundstopfen 64 gewährt. Die Sicherungskappe 52 soll ein versehentliches Lösen oder Herausschrauben der Ringmutter mit Verlust des Vakuums verhindern. Über die Sicherungskappe 52 bzw. auf den 2"-Spundstutzen 20 kann noch ein üblicher dünner Kunststoff-Schnappdeckel zum Schutz gegen Schmutz und Regenwasser aufgeschnappt sein.

Bei der vorliegenden Erfindung liegt der Inliner 22 formangepasst vollflächig wie eine zweite Haut auf der inneren Oberfläche Spundfasses 10 auf. Ein wesentlicher Vorteil eines solchen Zweite-Haut-Inliners besteht darin, dass der Foliensack keine so hohe Reißfestigkeit gegen Flattern beim Befüllen oder Hin- und Herschwappen des flüssigen Füllguts bei Transportbewegungen wie bisher üblich benötigt, da hier keinerlei Bewegung des Inliner-Folienmaterials erfolgt, weil dieses fest und dauerhaft auf der Innenseite des Spundfasses 10 anliegt, bzw. wieder ablösbar angeklebt ist. Dadurch können auch preiswertere rissempfindliche Folienmaterialien mit hohen Barriereeigenschaften verwendet werden als bisher.

### Fazit:

Die vorliegende Erfindung stellt keine komplizierte Neukonstruktion eines Spundfasses dar, sondern ermöglicht auf phänomenale Weise, wie bei einem Standard-Spundfass mit Inliner einerseits eine Vakuumierung der schädlichen Zwischenluft zwischen Inliner und Fassinnenwandung direkt nach Einsetzen des Inliners und andererseits eine Entlüftung des Fassinneren bei Abfüllung oder Belüftung des Fassinneren bei Entnahme des Füllgutes durch ein und denselben Spundstutzen vorgenommen kann. Da diese Lösung für einen bekannten, im Markt verbreiteten Spundfasstyp mit zwei 2"-Spunden konzipiert ist, können damit nicht nur neu hergestellte Spundfässer sondern auch alle gebrauchten, im Markt befindlichen Spundfässer diesen Typs mit einem neuen Inliner versehen und für eine Wiederverwendung nutzbar gemacht werden.

### Bezugsziffernliste

| | | | |
|---|---|---|---|
| **10** | Kunststoff-Spundfass | **62** | Außengewinde (48) |
| **12** | zylinderförmige Fasswandung (10) | **64** | ¾"-Spundstopfen |
| **14** | scheibenförmiger Unterboden | **66** | Dichtungsring (64) |
| **16** | scheibenförmiger Oberboden | **68** | Durchgangsöffnung (28) |
| **18** | Einfüll- und Entleerungs-Spundstutzen (10) | **70** | Vakuumglocke |
| **20** | Ent- und Begasungs-Spundstutzen (10) | **72** | Dichtungsring (70) |
| **22** | Inliner (Foliensack) | **74** | Ziehwerkzeug (70) |
| **24** | Einfüll- und Entleerungs-Inlinerstutzen (22) | **76** | Ringspalt |
| **26** | Ent- und Begasungs-Inlinerstutzen (22) | | |
| **28** | Adapterring (26) | | |
| **30** | zylinderförmige Inlinerwandung (22) | | |
| **32** | scheibenförmiger Inlineroberboden (22) | | |
| **34** | scheibenförmiger Inlinerunterboden (22) | | |
| **36** | Inliner-Rolle (22) | | |
| **38** | Dichtungsbett (18) | | |
| **40** | Stutzenhals (18) | | |
| **42** | Schweißbett-Innenfläche (40) | | |
| **44** | 2"-Spundstopfen (18) | | |
| **46** | Flanschring (28) | | |
| **48** | Ringmutter | | |
| **50** | Durchgangsöffnung (48) | | |
| **52** | Sicherungskappe | | |
| **54** | Durchgangsöffnung (52) | | |
| **56** | Innengewinde (28) | | |
| **58** | Dichtungsbett (56) | | |
| **60** | Dichtungsring (46) | | |

## Patentansprüche

1. Spundfass (10) aus thermoplastischem Kunststoff mit eingesetztem aus dünnwandiger Kunststoff-Folie bestehendem Inliner (22), umfassend eine zylinderförmige Fasswandung (12), einen scheibenförmigen Unterboden (14) und einen scheibenförmigen Oberboden (16), in dem zwei mittels Spundverschluss verschließbare Spundstutzen (18, 20) angeordnet sind, wobei der eine Spundstutzen als Einfüll- und Entleerungs-Spundstutzen (18) und der andere Spundstutzen als Ent- und Belüftungs-Spundstutzen (20) ausgebildet ist, in welchen jeweils ein entsprechender Einfüll- und Entleerungs-Inlinerstutzen (24) und ein Ent- und Belüftungs-Inlinerstutzen (26) des Inliners (22) befestigt ist, wobei der Spundverschluss für den Ent- und Belüftungs-Spundstutzen (20) mehrteilig ausgebildet ist und wenigstens einen unteren Adapterring (28) und eine obere Überwurf- oder Ringmutter (48), die jeweils beide mit einer zentralmittigen Durchgangsöffnung (50, 70) versehen sind, und weiterhin einen zentralmittigen Spundstopfen (64) aufweist, der in die zentralmittige Durchgangsöffnung (68) des Adapterringes (28) eingeschraubt ist, wobei der Adapterring (28) fest am oberen Ende des Ent- und Belüftungs-Spundstutzen (26) des Inliners (22) angeschweißt ist und über einen Flanschring (46) von der aufgeschraubten Ringmutter (48) im Ent- und Belüftungs-Spundstutzen (20) des Spundfasses (10) fixiert ist, wobei beide Spundstutzen (18, 20) als gleichgroße standardisierte 2" Spundstutzen mit Innengewinde mit einer BCS 70 x 6 -Verschraubung ausgebildet sind,
**gekennzeichnet durch** folgende Merkmale:
- beide Spundstutzen (18, 20) weisen ein unter dem Innengewinde liegendes Dichtungsbett (38) auf,
- der Spundverschluss für den Einfüll- und Entleerungs-Spundstutzen (18) ist als handelsüblicher standardisierter 2"-Spundstopfen mit Außengewinde mit einer BCS 70 x 6 -Verschraubung und darunterliegendem Dichtungsring ausgebildet, der gegen das Dichtungsbett (38) im Einfüll- und Entleerungs-Spundstutzen (18) abdichtet,
- der Einfüll- und Entleerungs-Spundstutzen (18) weist unterhalb des Innengewindes an seiner engsten Durchgangsstelle im Stutzenhals (40) eine geglättete, ringflächenförmige Schweißbett-Innenfläche (42) auf, an die das obere Ende des Einfüll- und Entleerungs-Inlinerstutzen (24) des Inliners (22) fest angeschweißt ist,
- der in die zentralmittige Durchgangsöffnung (68) des Adapterringes (28) eingeschraubte Spundstopfen ist als handelsüblicher standardisierter ¾"-Spundstopfen (64) mit Außengewinde und darunterliegendem Dichtungsring (66) ausgebildet,
- der von der aufgeschraubten Ringmutter (48) übergriffene Flanschring (46) des Adapterringes (28) weist auf seiner Unterseite am Außenrand einen umlaufenden Dichtungsring (60) auf und dichtet das Fassinnere gegen das Dichtungsbett (38) unterhalb des Innengewindes im Ent- und Belüftungs-Spundstutzen (20) ab.

2. Spundfass (10) nach Anspruch 1,
**dadurch gekennzeichnet, dass**
die aufgeschraubte Ringmutter (48) von oben von einer aufgeschnappten oder aufgeclinchten Sicherungskappe (52) abgedeckt ist, die ebenfalls mit einer zentralmittigen Durchgangsöffnung (54) versehen ist und durch diese Durchgangsöffnung (54) einen freien Zugang auf den zentralmittig im Adapterring (28) eingeschraubten ¾"-Spundstopfen (64) gewährt.

3. Spundfass (10) nach Anspruch 1 oder 2,
**dadurch gekennzeichnet, dass**
der auf der Unterseite am Außenrand des Adapter-Flanschringes (46) umlaufende Dichtungsring (60) den Zwischenluftraum zwischen Inlineroberfläche und Fassinnenwandung gegen das im Ent- und Belüftungs-Spundstutzen (20) unterhalb des Innengewindes angeordnete Dichtungsbett (38) abdichtet.

4. Spundfass (10) nach Anspruch 1, 2 oder 3,
**dadurch gekennzeichnet, dass**
bei gelöster oder ausgeschraubter Ringmutter (48) der Adapterring (28) mit seinem auf der Unterseite des Flanschringes (46) umlaufenden Dichtungsring (60) mitsamt fest eingeschraubtem zentralmittigem ¾"-Spundstopfen (64) mittels eines durch eine Vakuumglocke (70) geführtes Ziehwerkzeuges (72) nach oben anhebbar ausgebildet ist und zwischen Dichtungsring (60) und Dichtungsbett (38) ein Ringspalt (76) ausgebildet ist, durch den mittels einer an die Vakuumglocke (70) angeschlossenen Vakuumpumpe im Zwischenluftraum zwischen Inlineroberfläche und Fassinnenwandung ein Vakuum ziehbar ist.

5. Spundfass (10) nach Anspruch 1, 2, 3 oder 4,
**dadurch gekennzeichnet, dass**
nach erfolgter Vakuumziehung, wenn die Inlineroberfläche nahezu vollständig bzw. vollflächig an der Fassinnenwandung anliegt, der Adapterring (28) mitsamt fest eingeschraubtem zentralmittigem ¾"-Spundstopfen (64) mittels des durch die Vakuumglocke (70) geführten Ziehwerkzeuges (72) nach unten führbar und der auf der Unterseite des Adapter-Flanschringes (46) umlaufende Dichtungsring (60) fest und gasdicht auf das im Ent- und Belüftungs-Spundstutzen (20) unterhalb des Innengewindes angeordnete Dichtungsbett (38) pressbar ausgebildet und nachfolgend von der von oben fest aufgeschraubten Ringmutter (48) dauerhaft in gasdichter Position fixiert ist.

6. Spundfass (10) nach Anspruch 1, 2, 3,4 oder 5,
**dadurch gekennzeichnet, dass** die Inlinerfolie so ausgestaltet ist, dass nach erfolgter Vakuumziehung, wenn die Inlineroberfläche nahezu vollflächig an der inneren Oberfläche der Fassinnenwandung anliegt, bei herausgeschraubtem 2"-Spundstopfen (44) auf der Einfüllseite und herausgeschraubtem ¾"- Spundstopfen (64) auf der Entgasungsseite, Heißluft derart in das Fassinnere, und zwar in das Innere des Inliners (22), insbesondere im oberen Bereich der Fasswandung und des Oberbodens, eingeblasen werden kann, dass eine thermische Aktivierung der Inlinerfolie bewirkt werden kann und die äußere Oberfläche des Inliners (22) leicht gegen die innere Oberfläche der Fasswandung geklebt werden kann.

7. Spundfass (10) nach Anspruch 6,
**dadurch gekennzeichnet, dass**
die Einblasung der Heißluft in das Innere des Inliners (22) für einen verbesserten Klebeffekt bei erhöhtem Druck erfolgt sein kann.

8. Spundfass (10) nach wenigstens einem der vorhergehenden Ansprüche 1 bis 7,
**dadurch gekennzeichnet, dass**
der zentralmittig angeordnete ¾"-Spundstopfen (64) - bei einer fest eingeschraubten Ringmutter (48) für eine Befüllung des Spundfasses (10) mit flüssigem Füllgut in einer automatischen Abfüllanlage mittels Druck-Füllrohr und für eine Entnahme des flüssigen Füllgutes in einer automatischen Entleerungsanlage mittels Unterdruck-Saugrohr durch den gegenüberliegenden Einfüll- und Entleerungs-Spundstutzen (18) - durch die mit zentralmittiger Durchgangsöffnung (54) versehene Sicherungskappe (52) frei zugänglich ist und manuell mittels Schraubwerkzeug oder automatisch mittels Schraubautomaten heraus- und wieder einschraubbar ausgebildet ist.

9. **Inliner** (22) zum Einsetzen in ein Spundfass gemäß wenigstens einem der vorhergehenden Ansprüche 1 bis 8,
**gekennzeichnet durch,**
eine zylinderförmige Inlinerwandung (30), einen scheibenförmigen Unterboden (34) und einen scheibenförmigen Oberboden (32), in dem zwei Inlinerstutzen (24, 26) angeordnet sind, wobei der eine Inlinerstutzen einen größeren Durchmesser als der andere aufweist und als Einfüll- und Entleerungs-Stutzen (24) dient und der andere Inlinerstutzen (26) zur Entlüftung und Belüftung bei Befüllung bzw. Entleerung des Inliners und des Spundfasses (10) mit flüssigem Füllgut dient, wobei das obere Ende dieses Spundstutzens (26) mit kleinerem Durchmesser fest an einen Adapterring (28) angeschweißt ist, der einen radial abstehenden Flanschring (46) aufweist, an dessen Unterseite ein umlaufender Dichtungsring (60) angeordnet bzw. befestigt ist.

10. Inliner (22) nach Anspruch 9,
**dadurch gekennzeichnet, dass**
die Inlinerstutzen (24, 26) derart von der Innenseite her mit einem radial nach innen gerichteten Schweißflanschrand gegen die Inlinerwandung des Inlineroberbodens (32) an- oder eingeschweißt und von innen nach außen gekrempelt sind, dass alle vorhandenen Folien-Schnittkanten gegen Füllgut-Kontakt abgedeckt sind und keine Folien-Schnittkante - weder diejenige am Schweiß-Flanschrand der aufgeschweißten Inlinerstutzen (24, 26) noch diejenige an der innenseitigen Begrenzung der Durchgangsöffnungen in der Inlinerwandung - mit dem eingefüllten flüssigen Füllgut in Kontakt gelangt.

11. Inliner (22) nach Anspruch 9 oder 10,
**dadurch gekennzeichnet, dass**
die aufgeschweißten Inlinerstutzen (24, 26) den gleichen mehrschichtigen Folienaufbau wie die Inlinerwandung (30, 32, 34) aufweisen.

12. Inliner (22) nach Anspruch 9, 10 oder 11,
**dadurch gekennzeichnet, dass**
der Inlinerstutzen (24) mit dem größeren Durchmesser vor dem Einsetzen in das Spundfass (10) eine Länge von wenigstens seinem doppelten Durchmesser aufweist und an seinem freien Ende abgeschweißt oder gasdicht verschlossen ist.

13. Inliner (22) nach wenigstens einem der vorhergehenden Ansprüche 9 bis 12,
**dadurch gekennzeichnet, dass**
der Inlinerstutzen (24) mit dem größeren Durchmesser nach dem Einsetzen in das Spundfass (10) auf passende Länge abgeschnitten und in Einfüll- und Entnahme-Spundstutzen (18) direkt unterhalb dessen Innengewindes an eine Schweißbett-Innenfläche (42) im Stutzenhals (40) radial eingeschweißt ist.

14. **Verfahren** zur Herstellung eines Spundfasses (10) nach einem der vorhergehenden Ansprüche 1 bis 8 mit einem Inliner (22) nach einem der vorhergehenden Ansprüche 9 bis 13,
**gekennzeichnet durch,** folgende Verfahrensschritte :
- Bereitstellen eines handelsüblichen Standard-Spundfasses (10) mit zwei 2"-Spundstutzen mit 70 x 6 -Verschlüssen und einem handelsüblichen 2"-Spundstopfen (44) für einen 70 x 6 Verschluss und einem handelsüblichen ¾"-Spundstopfen (64) für einen 70 x 6 Verschluss, wobei der eine 2"-Spundstutzen mit dem 2"-Spundstopfen (44) als Einfüll- und Entnahmespund (18) für das flüssige Füllgut dient und der andere 2"-Spundstutzen als Entlüftungs- und Belüftungsspund (20) für das Füllvolumen im Inneren des Inliners (22) und für den Zwischenluftraum zwischen der äußeren Oberfläche des Inliners (22) und der Fassinnenwandung dient,
- Bereitstellen eines Inliners (22) mit zwei unterschiedlich großen Inliner-Spundstutzen (24, 26), wobei der größere Spundstutzen für den 2"-Spundstutzen mit dem 70 x 6 Verschluss vorgesehen und etwas länger mit einem zugeschweißten freien Ende ausgebildet ist, während am Ende des kürzeren etwas kleineren Spundstutzens ein hohler hülsenartiger Adapterring (28) mit unterem Dichtungsring (60) angeschweißt ist,
- Aufrollen des Inliners (22) zu einer schlanken Rolle (36), wobei der angeschweißte Adapterring (28) oben an der Rolle (36) angeordnet ist,
- Einsetzen der schlanken Rolle (36) **durch** den Entlüftungs- und Belüftungsspund (20) und Fixieren des Adapterringes (28) mittels einer den Adapterring (28) umschließenden Ringmutter (48) mit einer zentralmittigen Durchgangsöffnung (50) und mit einem Außengewinde für den 70 x 6 Verschluss im 2"-Spundstutzen des Entlüftungs- und Belüftungsspundes (20), wobei der Adapterring (28) mit unterem Dichtungsring (60) den Zwischenluftraum zwischen der äußeren Oberfläche des Inliners (22) und der Fassinnenwandung im 2"-Spundstutzen (20) abdichtet,
- Einblasen von Druckluft in den Entlüftungs- und Belüftungsspund (20) bis der Inliner (22) vollständig aufgeblasen ist und der zugeschweißte größere Inliner-Spundstutzen (24) aus dem gegenüberliegenden Einfüll- und Entnahmespund (18) herausschaut,
- Abschneiden des zugeschweißten freien Endes des größeren Inliner-Spundstutzens (24) und Umstülpen des Inliner-Spundstutzens nach außen über den 2"-Spundstutzen (18) des Spundfasses (10),
- radiales Einschweißen des Inlinerstutzens (24) unterhalb des Innengewindes im 2"-Spundstutzen (18) und passgenaues Abschneiden des überschüssigen und/oder überstehenden Inlinerstutzens (24) oberhalb der Schweißringfläche (42) unterhalb des Innengewindes,
- Aufsetzen einer Vakuumglocke (70) auf den Entlüftungs- und Belüftungsspund (20) und bei gelöster Ringmutter (48) und angehobenem Adapterring (28) mittels einer an die Vakuumglocke (70) angeschlossenen Unterdruckpumpe sämtliche Luft aus dem Zwischenluftraum zwischen der äußeren Oberfläche des Inliners (22) und der Fassinnenwandung absaugen und ein Vakuum ziehen bis die äußere Oberfläche des Inliners (22) vollflächig an der Fassinnenwandung anliegt,
- Festziehen der Ringmutter (48) und Anpressen des Adapterringes (28) mit unterem Dichtungsring (60) im 2"-Spundstutzen (20) zum dauerhaften Erhalt des Vakuums zwischen Inliner und Fassinnenwandung,
- Einschrauben des 2"-Spundstopfens (44) in den 2"-Spundstutzens (18) des Einfüll- und Entnahmespundes und Einschrauben des ¾"-Spundstopfens (64) in den hülsenartigen, mit einem Innengewinde (56) versehenen Adapterring (28).

15. Verfahren nach dem vorherigen Anspruch 14,
**dadurch gekennzeichnet, dass**
zur gesicherten Abdeckung eine Sicherungskappe (52) mit zentralmittiger Durchgangsöffnung (54) auf den 2"-Spundstutzen (20) aufgesetzt wird, um ein versehentliches Lösen oder Herausschrauben der Ringmutter (48) mit Verlust des Vakuums zu verhindern.

16. Verfahren nach Anspruch 14,
**dadurch gekennzeichnet, dass**
während des Vakuumziehens durch den Entlüftungs- und Belüftungs-Spundstutzen (20) durch den gegenüberliegenden Befüll- und Entleerungs-Spundstutzen (18) Druckluft in das Innere des Inliners (22) geblasen wird, so dass die Inlinerfolie des Inliners (22) vollflächig an die Innenwandung des Spundfasses (10) gedrückt und sämtliche Zwischenraumluft ausgedrückt wird.

17. Verfahren nach einem der vorherigen Ansprüche 14, 15 oder 16,
**dadurch gekennzeichnet, dass**
die eingeblasene Druckluft zur thermischen Aktivierung der Inlinerfolie als Heißluft eingeblasen wird, so dass die Außenseite der Inlinerfolie einen Klebeeffekt entfaltet und an der Innenwandung des Spundfasses (10) anhaftet und/oder wieder ablösbar anklebt.

## Claims

1. Closed-head drum (10) from thermoplastic plastics material, having an inserted liner (22) composed of a thin-walled plastics material film, comprising a cylindrical drum wall (12), a disk-shaped lower base (14), and a disk-shaped upper base (16) in which two bung connectors (18, 20) which are closable by means of a bung closure are disposed, wherein the one bung connector is configured as a filling and retrieval bung connector (18), and the other bung connector is configured as a ventilation and aeration bung connector (20), one respective filling and retrieval liner connector (24) and one ventilation and aeration liner connector (26) of the liner (22) being in each case fastened in said bung connectors (18, 20), wherein the bung closure for the ventilation and aeration bung connector (20) is configured in multiple parts and has at least one lower adapter ring (28) and an upper union or ring nut (48) which both are in each case provided with one centric passage opening (50, 70), and furthermore has a centric bung plug (64) which is screw-fitted into the centric passage opening (68) of the adapter ring (28), wherein the adapter ring (28) is fixedly welded to the upper end of the ventilation and aeration bung connector (26) of the liner (22), and by way of a flange ring (46) of the screw-fitted ring nut (48) is fixed in the ventilation and aeration bung connector (20) of the closed-head drum (10), wherein both bung connectors (18, 20) are configured as identically-sized standardized 2" bung connectors having an internal thread having a BCS 70 x 6 screw fitting,
**characterized by** the following features:
- both bung connectors (18, 20) have a sealing bed (38) that lies below the internal thread;
- the bung closure for the filling and retrieval bung connector (18) is configured as a commercially available standardized 2" bung plug having an external thread having a BCS 70 x 6 screw fitting and a sealing ring lying therebelow, said sealing ring sealing against the sealing bed (38) in the filling and retrieval bung connector (18);
- the filling and retrieval bung connector (18), below the internal thread at the tightest passage point of said filling and retrieval bung connector (18) in the connector neck (40), has a smoothed, annular flat weld bed inner surface (42) to which the upper end of the filling and retrieval liner connector (24) of the liner (22) is fixedly welded;
- the bung plug screw-fitted into the centric passage opening (68) of the adapter ring (28) is configured as a commercially available standardized %" bung plug (64) having an external thread and a sealing ring (66) lying therebelow;
- the flange ring (46), engaged across by the screw-fitted ring nut (48), of the adapter ring (28), on the lower side thereof, on the external periphery has an encircling sealing ring (60), and seals the drum interior against the sealing bed (38) below the internal thread in the ventilation and aeration bung connector (20).

2. Closed-head drum (10) according to Claim 1,
**characterized in that**
the screw-fitted ring nut (48) from above is covered by a snap-fitted or clinch-fitted safety cap (52) which is likewise provided with a centric passage opening (54) and by way of said passage opening (54) permits free access to the ¾" bung plug (64) that is screwed-fitted so as to be centric in the adapter ring (28).

3. Closed-head drum (10) according to Claim 1 or 2,
**characterized in that**
the sealing ring (60) on the lower side encircling the external periphery of the adapter flange ring (46) seals the intermediate air space between the liner surface and the drum internal wall against the sealing bed (38) arranged in the ventilation and aeration bung connector (20) below the internal thread.

4. Closed-head drum (10) according to Claim 1, 2 or 3,
**characterized in that**
in the case of a released or unscrewed ring nut (48), the adapter ring (28), with its sealing ring (60) running around the underside of the flange ring (46), and including the tightly screw-fitted centric ¾" bung plug (64), is configured so as to be capable of being lifted upward by means of a pulling tool (72) that is guided through a vacuum bell jar (70), and an annular gap (76) is configured between the sealing ring (60) and the sealing bed (38), a vacuum by means of a vacuum pump that is connected to the vacuum bell jar (70) being capable of being extracted in the intermediate air space between the liner surface and the drum internal wall through said annular gap (76).

5. Closed-head drum (10) according to Claim 1, 2, 3, or 4,
**characterized in that**
upon completed vacuum extraction, when the liner surface bears in an almost complete or fully planar manner, respectively, on the drum internal wall, the adapter ring (28), including the tightly screwed-fitted centric ¾" bung plug (64), by means of the pulling tool (72) that is guided through the vacuum bell jar (70) is guidable downward, and the circumferential sealing ring (60) on the underside of the adapter flange ring (46) is configured so as to be capable of being pressed in a firm and gas-tight manner onto the sealing bed (38) that is disposed in the ventilation and aeration bung connector (20) below the internal thread, and is subsequently permanently fixed in a gas-tight position by the ring nut (48) that is tightly screw-fitted from above.

6. Closed-head drum (10) according to Claim 1, 2, 3, 4, or 5,
**characterized in that**
the liner film is configured such that, upon completed vacuum extraction, when the liner surface bears in an almost fully planar manner on the internal surface of the drum internal wall, in the case of an unscrewed 2" bung plug (44) on the filling side and an unscrewed ¾" bung plug (64) on the degassing side, hot air can be blown into the drum interior, specifically into the interior of the liner (22), in particular in the upper region of the drum wall and of the upper base, in such a manner that a thermal activation of the liner film can be effected and the external surface of the liner (22) can be slightly adhesively bonded to the internal surface of the drum wall.

7. Closed-head drum (10) according to Claim 6,
**characterized in that**
the blowing of the hot air into the interior of the liner (22) for an improved adhesive effect can be performed at an increased pressure.

8. Closed-head drum (10) according to at least one of preceding Claims 1 to 7,
**characterized in that**
the centrically disposed ¾" bung plug (64), in the case of a tightly screw-fitted ring nut (48) for filling the closed-head drum (10) with liquid filling material in an automatic filling system by means of a pressurized filler pipe and for a retrieval of the liquid filling material in an automatic emptying system by means of a vacuum suction pipe through the opposite filling and retrieval bung connector (18), is freely accessible through the safety cap (52) provided with the centric passage opening (54), and is configured so as to be capable of being unscrewed and screw-fitted again manually by means of a screwdriver tool or automatically by means of a robotic screwdriver.

9. Liner (22) for inserting into a closed-head drum according to at least one of preceding Claims 1 to 8,
**characterized by**
a cylindrical liner wall (30), a disk-shaped lower base (34), and a disk-shaped upper base (32) in which two liner connectors (24, 26) are disposed, wherein the one liner connector has a larger diameter than the other liner connector and serves as a filling and retrieval connector (24), and the other liner connector (26) serves for ventilation and aeration when filling or emptying, respectively, the liner and the closed-head drum (10) with liquid filling material, wherein the upper end of said bung connector (26) having a smaller diameter is fixedly welded to an adapter ring (28) which has a radially projecting flange ring (46), a circumferential sealing ring (60) being disposed on, or fastened to, respectively the underside of said flange ring (46).

10. Liner (22) according to Claim 9,
**characterized in that**
the liner connectors (24, 26) by way of a radially inwardly directed welded flange periphery are welded from the internal side to the liner wall of the liner upper base (32) and are rolled from the inside to the outside in such a manner that all existing film cutting edges are covered in relation to filling-material contact and no film cutting edge, neither the film cutting edge on the welded flange periphery of the welded liner connectors (24, 26) nor the film cutting edge on the internal-side delimitation of the passage openings in the liner wall, comes into contact with the filled liquid filling material.

11. Liner (22) according to Claim 9 or 10,
**characterized in that**
the welded liner connectors (24, 26) have the same multiple-layer film construction as the liner wall (30, 32, 34).

12. Liner (22) according to Claim 9, 10, or 11,
**characterized in that**
the liner connector (24) having the larger diameter, prior to insertion into the closed-head drum (10), has a length of at least double the diameter of said liner connector (24), and at the free end thereof is welded shut or is closed in a gas-tight manner.

13. Liner (22) according to at least one of preceding Claims 9 to 12,
**characterized in that**
the liner connector (24) having the larger diameter, upon insertion into the closed-head drum (10), is cut to an appropriate length and in the filling and retrieval bung connector (18), directly below the internal thread thereof, is radially welded onto a weld bed inner surface (42) in the connector neck (40).

14. Method for producing a closed-head drum (10) according to one of preceding Claims 1 to 8, having a liner (22) according to one of preceding Claims 9 to 13,
**characterized by** the following method steps:
- providing a commercially available standard closed-head drum (10) having two 2" bung connectors having 70 x 6 closures, and a commercially available 2" bung plug (44) for a 70 x 6 closure, and a commercially available ¾" bung plug (64) for a 70 x 6 closure, wherein the one 2" bung connector having the 2" bung plug (44) serves as a filling and retrieving bung (18) for the liquid filling material, and the other 2" bung connector serves as a ventilation and aeration bung (20) for the filling volume in the interior of the liner (22) and for the intermediate air space between the external surface of the liner (22) and the drum internal wall;
- providing a liner (22) having two dissimilarly sized liner bung connectors (24, 26), wherein the larger bung connector is provided for the 2" bung connector having the 70 x 6 closure and is configured so as to be somewhat longer and so as to have a free end that is welded shut, while a hollow sleeve-type adapter ring (28) having a lower sealing ring (60) is welded to the end of the shorter, somewhat smaller bung connector;
- rolling up the liner (22) so as to form a slim roll (36), wherein the welded adapter ring (28) is disposed on the top of the roll (36);
- inserting the slim roll (36) through the ventilation and aeration bung (20) and fixing the adapter ring (28) by means of a ring nut (48) which encircles the adapter ring (28) and which has a centric passage opening (50) and which has an external thread for the 70 x 6 closure in the 2" bung connector of the ventilation and aeration bung (20), wherein the adapter ring (28) with the lower sealing ring (60) seals the intermediate air space between the external surface of the liner (22) and the drum internal wall in the 2" bung connector (20);
- blowing compressed air into the ventilation and aeration bung (20) until the liner (22) is fully inflated and the welded-shut larger liner bung connector (24) pokes out of the opposite filling and retrieving bung (18);
- cutting off the welded-shut free end of the larger liner bung connector (24), and inverting the liner bung connector toward the outside, over the 2" bung connector (18) of the closed-head drum (10);
- radially welding the liner connector (24) below the internal thread in the 2" bung connector (18), and cutting off the surplus and/or projecting liner connector (24) to an exact fit above the annular welding surface (42) below the internal thread,
- placing a vacuum bell jar (70) onto the ventilation and aeration bung (20) and, with a released ring nut (48) and a lifted adapter ring (28), by means of a vacuum pump that is connected to the vacuum bell jar (70) suction all of the air from the intermediate air space between the external surface of the liner (22) and the drum internal wall, and extracting a vacuum until the external surface of the liner (22) bears in a fully planar manner on the drum internal wall;
- tightening the ring nut (48) and compressing the adapter ring (28) with the lower sealing ring (60) in the 2" bung connector (20), for permanently maintaining the vacuum between the liner and the drum internal wall;
- screw-fitting the 2" bung plug (44) into the 2" bung connector (18) of the filling and retrieving bung, and screw-fitting the ¾" bung plug (64) into the sleeve-type adapter ring (28) provided with an internal thread (56) .

15. Method according to preceding Claim 14,
**characterized in that**
for secured covering, a safety cap (52) with a centric passage opening (54) is placed onto the 2" bung connector (20), so as to prevent any unintentional release or unscrewing of the ring nut (48) and an associated loss of the vacuum.

16. Method according to Claim 14,
**characterized in that**
during the extraction of the vacuum through the ventilation and aeration bung connector (20), compressed air is blown through the opposite filling and retrieval bung connector (18) into the interior of the liner (22) such that the liner film of the liner (22) is pushed in a fully planar manner onto the internal wall of the closed-head drum (10) and all of the intermediate space air is squeezed out.

17. Method according to one of preceding Claims 14, 15, or 16,
**characterized in that**
the blown-in compressed air for thermally activating the liner film is blown in as hot air such that the external side of the liner film develops an adhesive effect and adheres to the internal wall of the closed-head drum (10) and/or sticks thereto in a releasable manner.

## Revendications

1. Fût à bonde (10) en matière plastique thermoplastique muni d'un revêtement intérieur (22) à paroi mince inséré constitué d'un film en matière plastique, comprenant une paroi de fût cylindrique (12), un plancher en forme de disque (14) et un plafond en forme de disque (16), dans lequel deux embouts de bonde (18, 20) pouvant être fermés au moyen d'une fermeture de bonde sont agencés, un embout de bonde étant configuré en tant qu'embout de bonde de remplissage et vidage (18) et l'autre embout de bonde étant configuré en tant qu'embout de bonde de ventilation et d'aération (20), dans lesquels un embout de revêtement intérieur de remplissage et vidage correspondant (24) et un embout de revêtement intérieur de ventilation et d'aération (26) du revêtement intérieur (22) est à chaque fois attaché, la fermeture de bonde pour l'embout de bonde de ventilation et d'aération (20) étant configurée en plusieurs parties et comprenant au moins un anneau adaptateur inférieur (28) et un écrou à chapeau ou à anneau supérieur (48), qui sont respectivement tous les deux munis d'une ouverture de passage centrale (50, 70), et en outre un bouchon de bonde central (64), qui est vissé dans l'ouverture de passage centrale (68) de l'anneau adaptateur (28), l'anneau adaptateur (28) étant solidement soudé sur l'extrémité supérieure de l'embout de bonde de ventilation et d'aération (26) du revêtement intérieur (22) et étant fixé par l'intermédiaire d'un anneau de bride (46) par l'écrou à anneau vissé (48) dans l'embout de bonde de ventilation et d'aération (20) du fût à bonde (10), les deux embouts de bonde (18, 20) étant configurés sous la forme d'embouts de bonde de 2 po normalisés de même taille munis d'un filetage intérieur muni d'un vissage BCS 70 X 6, **caractérisé par** les caractéristiques suivantes :
- les deux embouts de bonde (18, 20) comprennent un lit d'étanchéité (38) situé sous le filetage intérieur,
- la fermeture de bonde pour l'embout de bonde de remplissage et vidage (18) est configurée en tant que bouchon de bonde de 2 po normalisé usuel muni d'un filetage extérieur muni d'un vissage BCS 70 x 6 et d'un anneau d'étanchéité sous-jacent, qui étanchéifie contre le lit d'étanchéité (38) dans l'embout de bonde de remplissage et vidage (18),
- l'embout de bonde de remplissage et vidage (18) comprend, en dessous du filetage intérieur au niveau de son emplacement de passage le plus étroit dans le col d'embout (40), une surface intérieure de lit de soudage lissée en forme de surface annulaire (42), sur laquelle l'extrémité supérieure de l'embout de revêtement intérieur de remplissage et vidage (24) du revêtement intérieur (22) est solidement soudée,
- le bouchon de bonde vissé dans l'ouverture de passage centrale (68) de l'anneau adaptateur (28) est configuré en tant que bouchon de bonde de ¾ po normalisé usuel (64) muni d'un filetage extérieur et d'un anneau d'étanchéité sous-jacent (66),
- l'anneau de bride (46), recouvert par l'écrou à anneau vissé (48), de l'anneau adaptateur (28) comprend sur son côté inférieur sur le bord extérieur un anneau d'étanchéité circonférentiel (60) et étanchéifie l'intérieur de fût contre le lit d'étanchéité (38) en dessous du filetage intérieur dans l'embout de bonde de ventilation et d'aération (20).

2. Fût à bonde (10) selon la revendication 1,
**caractérisé en ce que**
l'écrou à anneau vissé (48) est recouvert sur le haut par un capuchon de sécurité encliqueté ou clinché (52), qui est également muni d'une ouverture de passage centrale (54) et donne un accès libre au travers de cette ouverture de passage (54) au bouchon de bonde de ¾ po (64) vissé centralement dans l'anneau adaptateur (28).

3. Fût à bonde (10) selon la revendication 1 ou 2,
**caractérisé en ce que**
l'anneau d'étanchéité (60) circonférentiel sur le côté inférieur sur le bord extérieur de l'anneau de bride d'adaptateur (46) étanchéifie l'espace d'air intermédiaire entre la surface de revêtement intérieur et la paroi intérieure de fût contre le lit d'étanchéité (38) agencé dans l'embout de bonde de ventilation et d'aération (20) en dessous du filetage intérieur.

4. Fût à bonde (10) selon la revendication 1, 2 ou 3,
**caractérisé en ce que**
avec l'écrou à anneau (48) desserré ou dévissé, l'anneau adaptateur (28) est configuré avec son anneau d'étanchéité (60) circonférentiel sur le côté inférieur de l'anneau de bride (46), y compris le bouchon de bonde de ¾ po central solidement vissé (64), sous forme soulevable vers le haut au moyen d'un outil de traction (72) passé au travers d'une cloche à vide (70) et une fente annulaire (76) est formée entre l'anneau d'étanchéité (60) et le lit d'étanchéité (38), au travers de laquelle un vide peut être tiré au moyen d'une pompe à vide raccordée à la cloche à vide (70) dans l'espace d'air intermédiaire entre la surface de revêtement intérieur et la paroi intérieure de fût.

5. Fût à bonde (10) selon la revendication 1, 2, 3 ou 4,
**caractérisé en ce que**
après le tirage de vide, lorsque la surface de revêtement intérieur est appliquée de manière presque complète ou entièrement plane sur la paroi intérieure de fût, l'anneau adaptateur (28), y compris le bouchon de bonde de ¾ po central solidement vissé (64), peut être acheminé vers le bas au moyen de l'outil de traction (72) passé au travers de la cloche à vide (70) et l'anneau d'étanchéité (60) circonférentiel sur le côté inférieur de l'anneau de bride d'adaptateur (46) est configuré sous forme pouvant être comprimée solidement et de manière étanche aux gaz sur le lit d'étanchéité (38) agencé dans l'embout de bonde de ventilation et d'aération (20) en dessous du filetage intérieur et est ensuite fixé par l'écrou à anneau (48) solidement vissé par le haut de manière durable en position étanche aux gaz.

6. Fût à bonde (10) selon la revendication 1, 2, 3, 4 ou 5,
**caractérisé en ce que** le film de revêtement intérieur est conçu de telle sorte qu'après le tirage de vide, lorsque la surface de revêtement intérieur est presque complètement en contact avec la surface intérieure de la paroi intérieure de fût, avec le bouchon de bonde de 2 po (44) dévissé sur le côté de remplissage et le bouchon de bonde de ¾ po (64) dévissé sur le côté de dégazage, de l'air chaud puisse être injecté dans l'intérieur de fût, et ce dans l'intérieur du revêtement intérieur (22), notamment dans la zone supérieure de la paroi de fût et du plafond, de telle sorte qu'une activation thermique du film de revêtement intérieur puisse être provoquée et que la surface extérieure du revêtement intérieur (22) puisse être collée légèrement contre la surface intérieure de la paroi de fût.

7. Fût à bonde (10) selon la revendication 6,
**caractérisé en ce que**
l'injection de l'air chaud dans l'intérieur du revêtement intérieur (22) peut avoir lieu à pression élevée pour un effet de collage amélioré.

8. Fût à bonde (10) selon au moins l'une quelconque des revendications 1 à 7 précédentes,
**caractérisé en ce que**
le bouchon de bonde de ¾ po agencé centralement (64), avec un écrou à anneau (48) solidement vissé pour un remplissage du fût à bonde (10) avec un contenu liquide dans une unité de remplissage automatique au moyen d'un tube de remplissage à pression et pour un soutirage du contenu liquide dans une unité de vidage automatique au moyen d'un tube d'aspiration à sous-pression au travers de l'embout de bonde de remplissage et vidage opposé (18), est librement accessible au travers du capuchon de sécurité (52) muni de l'ouverture de passage centrale (54) et est configuré pour pouvoir être dévissé et revissé manuellement au moyen d'un outil de vissage ou automatiquement au moyen d'une machine de vissage.

9. **Revêtement intérieur** (22) destiné à être inséré dans un fût à bonde selon au moins l'une quelconque des revendications 1 à 8 précédentes,
**caractérisé par**
une paroi de revêtement intérieur cylindrique (30), un plancher en forme de disque (34) et un plafond en forme de disque (32), dans lequel deux embouts de revêtement intérieur (24, 26) sont agencés, un embout de revêtement intérieur présentant un diamètre plus grand que l'autre et servant d'embout de remplissage et vidage (24) et l'autre embout de revêtement intérieur (26) servant à la ventilation et à l'aération lors du remplissage ou du vidage du revêtement intérieur et du fût à bonde (10) avec un contenu liquide, l'extrémité supérieure de cet embout de bonde (26) ayant un diamètre plus petit étant soudée solidement à un anneau adaptateur (28), qui comprend un anneau de bride (46) faisant radialement saillie, sur le côté inférieur duquel un anneau d'étanchéité circonférentiel (60) est agencé ou fixé.

10. Revêtement intérieur (22) selon la revendication 9,
**caractérisé en ce que**
les embouts de revêtement intérieur (24, 26) sont soudés ou encapsulés contre la paroi de revêtement intérieur du plafond de revêtement intérieur (32) à partir du côté intérieur avec un bord de bride de soudage orienté radialement vers l'intérieur et retroussés de l'intérieur vers l'extérieur, de telle sorte que tous les bords coupés de film présents soient recouverts contre un contact avec le contenu et qu'aucun bord coupé de film, ni ceux sur le bord de bride de soudage des embouts de revêtement intérieur soudés (24, 26), ni ceux sur la délimitation du côté intérieur des ouvertures de passage dans la paroi de revêtement intérieur, ne rentre en contact avec le contenu liquide rempli.

11. Revêtement intérieur (22) selon la revendication 9 ou 10,
**caractérisé en ce que**
les embouts de revêtement intérieur soudés (24, 26) présentent la même structure de film multicouche que la paroi de revêtement intérieur (30, 32, 34).

12. Revêtement intérieur (22) selon la revendication 9, 10 ou 11,
**caractérisé en ce que**
l'embout de revêtement intérieur (24) ayant le plus grand diamètre présente avant l'insertion dans le fût à bonde (10) une longueur d'au moins deux fois son diamètre et est soudé ou fermé de manière étanche aux gaz au niveau de son extrémité libre.

13. Revêtement intérieur (22) selon au moins l'une quelconque des revendications 9 à 12 précédentes,
**caractérisé en ce que**
l'embout de revêtement intérieur (24) ayant le plus grand diamètre est coupé à une longueur appropriée après l'insertion dans le fût à bonde (10) et est soudé radialement dans l'embout de bonde de remplissage et vidage (18) directement en dessous de son filetage intérieur sur une surface intérieure de lit de soudage (42) dans le col d'embout (40).

14. **Procédé** pour la fabrication d'un fût à bonde (10) selon l'une quelconque des revendications 1 à 8 précédentes muni d'un revêtement intérieur (22) selon l'une quelconque des revendications 9 à 13 précédentes,
**caractérisé par** les étapes de procédé suivantes :
- la mise à disposition d'un fût à bonde standard usuel (10) muni de deux embouts de bonde de 2 po munis de fermetures 70 x 6 et d'un bouchon de bonde de 2 po usuel (44) pour une fermeture 70 x 6 et d'un bouchon de bonde de ¾ po usuel (64) pour une fermeture 70 x 6, un embout de bonde de 2 po muni du bouchon de bonde de 2 po (44) servant de bonde de remplissage et soutirage (18) pour le contenu liquide et l'autre embout de bonde de 2 po servant de bonde de ventilation et d'aération (20) pour le volume de remplissage à l'intérieur du revêtement intérieur (22) et pour l'espace d'air intermédiaire entre la surface extérieure du revêtement intérieur (22) et la paroi intérieure de fût,
- la mise à disposition d'un revêtement intérieur (22) muni de deux embouts de bonde de revêtement intérieur de tailles différentes (24, 26), le plus grand embout de bonde étant prévu pour l'embout de bonde de 2 po muni de la fermeture 70 x 6 et étant configuré sous forme un peu plus longue avec une extrémité libre soudée, tandis qu'un anneau adaptateur (28) en forme de manchon creux muni d'un anneau d'étanchéité inférieur (60) est soudé à l'extrémité de l'embout de bonde plus court, un peu plus petit,
- l'enroulement du revêtement intérieur (22) en un rouleau mince (36), l'anneau adaptateur soudé (28) étant agencé en haut sur le rouleau (36),
- l'insertion du rouleau mince (36) au travers de la bonde de ventilation et d'aération (20) et la fixation de l'anneau adaptateur (28) au moyen d'un écrou à anneau (48), entourant l'anneau adaptateur (28), muni d'une ouverture de passage centrale (50) et muni d'un filetage extérieur pour la fermeture 70 x 6, dans l'embout de bonde de 2 po de la bonde de ventilation et d'aération (20), l'anneau adaptateur (28) muni de l'anneau d'étanchéité inférieur (60) étanchéifiant l'espace d'air intermédiaire entre la surface extérieure du revêtement intérieur (22) et la paroi intérieure de fût dans l'embout de bonde de 2 po (20),
- l'injection d'air comprimé dans la bonde de ventilation et d'aération (20) jusqu'à ce que le revêtement inférieur (22) soit entièrement gonflé et que le plus grand embout de bonde de revêtement intérieur soudé (24) dépasse de la bonde de remplissage et soutirage opposée (18),
- la coupure de l'extrémité libre soudée du plus grand embout de bonde de revêtement intérieur (24) et le retournement de l'embout de bonde de revêtement intérieur vers l'extérieur au-dessus de l'embout de bonde de 2 po (18) du fût à bonde (10),
- soudage radial de l'embout de revêtement intérieur (24) en dessous du filetage intérieur dans l'embout de bonde de 2 po (18) et la coupure sur mesure de l'embout de revêtement intérieur (24) excédentaire et/ou saillant au-dessus de la surface annulaire de soudage (42) en dessous du filetage intérieur,
- la pose d'une cloche à vide (70) sur la bonde de ventilation et d'aération (20) et, avec l'écrou à anneau (48) desserré et l'anneau adaptateur (28) soulevé, l'aspiration de la totalité de l'air au moyen d'une pompe à sous-pression raccordée à la cloche à vide (70) à partir de l'espace d'air intermédiaire entre la surface extérieure du revêtement intérieur (22) et la paroi intérieure de fût et le tirage d'un vide jusqu'à ce que la surface extérieure du revêtement intérieur (22) soit appliquée sur toute la surface sur la paroi intérieure de fût,
- le serrage à fond de l'écrou à anneau (48) et le pressage de l'anneau adaptateur (28) muni d'un anneau d'étanchéité inférieur (60) dans l'embout de bonde de 2 po (20) pour le maintien durable du vide entre le revêtement intérieur et la paroi intérieure de fût,
- le vissage du bouchon de bonde de 2 po (44) dans l'embout de bonde de 2 po (18) de la bonde de remplissage et soutirage et le vissage du bouchon de bonde de ¾ po (64) dans l'anneau adaptateur (28) en forme de manchon, muni d'un filetage intérieur (56).

15. Procédé selon la revendication 14 précédente,
**caractérisé en ce que**
pour le recouvrement sécurisé, un capuchon de sécurité (52) muni d'une ouverture de passage centrale (54) est posé sur l'embout de bonde de 2 po (20), afin d'empêcher un desserrage ou dévissage accidentel de l'écrou à anneau (48) avec perte du vide.

16. Procédé selon la revendication 14,
**caractérisé en ce que**
pendant le tirage de vide au travers de l'embout de bonde de ventilation et d'aération (20), de l'air comprimé est injecté au travers de l'embout de bonde de remplissage et vidage opposé (18) dans l'intérieur du revêtement intérieur (22), de telle sorte que le film de revêtement intérieur du revêtement intérieur (22) soit appuyé sur toute la surface sur la paroi intérieure du fût à bonde (10) et que la totalité de l'air de l'espace intermédiaire soit évacuée.

17. Procédé selon l'une quelconque des revendications 14, 15 ou 16 précédentes,
**caractérisé en ce que**
l'air comprimé injecté est injecté en tant qu'air chaud pour l'activation thermique du film de revêtement intérieur, de telle sorte que le côté extérieur du film de revêtement intérieur développe un effet adhésif et adhère et/ou colle de manière amovible sur la paroi intérieure du fût à bonde (10).
